# EUROPEAN PATENT APPLICATION

(11) **EP 2 559 948 A1**
(43) Date of publication of application: **20.02.2013**
(21) Application number: 11768808.5
(22) Date of filing: 11.04.2011
(51) Int. Cl.: F23R 3/40, F02C 9/00, F02C 9/28

(54) **GAS TURBINE CONTROL DEVICE**

(30) Priority: 15.04.2010 JP 2010093667
(71) Applicant: Kawasaki Jukogyo Kabushiki Kaisha, Kobe-shi, Hyogo 650-8670 (JP)
(72) Inventor: KUROSAKA, So, Akashi-shi, Hyogo 673-8666 (JP); ASHIKAGA, Mitsugu, Akashi-shi, Hyogo 673-8666 (JP); OGATA, Masahiro, Akashi-shi, Hyogo 673-8666 (JP); HOSOKAWA, Yasufumi, Akashi-shi, Hyogo 673-8666 (JP); NISHI, Muneyuki, Akashi-shi, Hyogo 673-8666 (JP); SATO, Tsuyoshi, Akashi-shi, Hyogo 673-8666 (JP)
(74) Representative: Jenkins, Peter David
(86) International application number: PCT/JP2011/058965
(87) International publication number: WO 2011/129287

(57) **Abstract**

Provided is a controller for use with a gas turbine engine, which ensures a stable combustion regardless of the deterioration of the catalyst and elevated characteristics of the exhaust gas. The controller 6 is used in the engine which comprises a combustor 2 for combusting a mixture of compressed air from a compressor 1 and a fuel under the existence of catalyst, the combustor having a catalytic combustion unit 21 bearing the catalyst and a pre-burner 7 provided on an upstream side of the catalytic combustion unit with respect to a flow of the compressed air for supplying and combusting a pre-heating fuel PF with the compressed air CA. The controller comprises a memory 6c for memorizing an initial temperature difference D between inlet and outlet temperatures t1, t2 measured at inlet and outlet of the catalytic combustion unit with non-deteriorated catalyst accommodated therein, and a pre-burner control for calculating a present temperature difference between the inlet and outlet temperatures measured in an operation of the gas turbine engine and controlling an amount of the fuel to be supplied to the pre-burner according to a deterioration Δd of the catalyst which is provided by a difference between the initial and present temperature differences D and d.

## Description

### TECHNICAL FIELD

The present invention relates to a controller for use with a gas turbine engine incorporating a catalytic combustor which combusts a mixture of compressed air generated by a compressor and fuel such as natural gas under the existence of catalyst to generate high-temperature combustion gas.

### BACKGROUND OF THE INVENTION

There has been known a catalytic gas turbine engine which comprises pre-combustion and pre-mixing sections provided on the upstream side of the catalytic combustion unit and a burn-out section provided on the downstream side of the catalytic combustion unit. In this gas turbine engine, the catalytic combustion becomes unable to generate sufficiently high temperature combustion gas due to the age-related deterioration of the catalyst. This results in that a high-temperature zone in the burn-out section at a temperature of about 1,300°C reduces and then the combustion becomes unstable. The unstable combustion may increase carbon monoxide concentration in the exhaust gas, which deteriorates the characteristics of the exhaust gas. To solve this, JP 5-203151 (A) discloses a technique in which the deterioration of the catalyst is determined using a pressure loss at the catalytic unit to control the supply of the air and fuel and the resultant characteristics of the exhaust gas.

Disadvantageously, according to the above technique, controlling the air and fuel supply and thereby maintaining the high-temperature catalytic combustion may not prevent the catalyst or the combustion housing from being damaged by burning. Also, the combustion gas in the gas-phase combustor increases more than 1,500°C, which increases NOx concentration in the exhaust gas to deteriorate the characteristics of the exhaust gas.

To solve the problem, an object of the invention is to provide a controller for the turbine engine which ensures a stable combustion regardless of the deterioration of the catalyst and elevated characteristics of the exhaust gas.

### SUMMARY OF THE INVENTION

To this end, a controller is used with a gas turbine engine which comprises a combustor for combusting a mixture of compressed air from a compressor and a fuel under the existence of catalyst, the combustor having a catalytic combustion unit bearing the catalyst and a pre-burner provided on an upstream side of the catalytic combustion unit with respect to a flow of the compressed air for supplying and combusting a pre-heating fuel with the compressed air. The controller comprises a memory for memorizing an initial temperature difference between inlet and outlet temperatures measured at inlet and outlet of the catalytic combustion unit with non-deteriorated catalyst accommodated therein; and a pre-burner control for calculating a present temperature difference between the inlet and outlet temperatures measured in an operation of the gas turbine engine and controlling an amount of the fuel to be supplied to the pre-burner according to a deterioration of the catalyst which is provided by a difference between the initial and present temperature differences.

According to this arrangement, the deterioration of the catalyst decreases the outlet temperature, which results in that the temperature difference between the inlet and outlet temperatures becomes less than the initial difference. The difference between two temperature differences indicates the aged-deterioration of the catalyst. Accordingly, the aged-deterioration of the catalyst can be determined by the difference. Therefore, the pre-burner fuel control increases the open ratio of the secondary fuel control valve to increase the amount of fuel to be supplied to the pre-burner, which increases the inlet temperature to compensate the deterioration and thereby maintain the initial characteristics of the exhaust gas in a stable manner.

Preferably, the pre-burner fuel control controls the amount of the fuel to be supplied to the pre-burners so as to increase the inlet temperature of the catalytic combustion unit and thereby compensate the deterioration. The outlet temperature decreases with the deterioration of the catalyst. This results in that a temperature difference between the inlet and outlet temperatures becomes smaller than the initial temperature difference. The difference between the two temperature differences indicates the deterioration of the catalyst. According to this arrangement, the amount of fuel to be supplied to the pre-burner is controlled by the pre-burner fuel control to increase the inlet temperature and thereby compensate the deterioration. This ensures a stable combustion and maintains elevated characteristics of the exhaust gas.

Preferably, the controller further comprises a bypass passage for guiding a part of the compressed air from a portion positioned on an upstream side of the catalytic combustion unit to a portion positioned on a downstream side of the catalytic combustion unit while bypassing the catalytic combustion unit, and a bypass passage control valve for controlling an open ratio of the bypass passage, wherein the open ratio of the bypass control valve is increased with an increase of the deterioration by the fuel control.

Preferably, the controller comprises means for increasing the open ratio of the bypass control valve to maintain the outlet temperature of the catalytic combustion unit within a predetermined rage when the main fuel to be supplied to the catalytic combustion unit is decreased in response to a load decrease. When the load decreases, the amount of main fuel is decreased. This may result in a deterioration of combustion in the burn-out zone. For example, the outlet temperature decreases due to a drastic reduction in catalytic reaction rate and therefore the concentration of carbon monoxide increases. According to the invention, the open ratio of the bypass control valve is increased and, as a result, an amount of air bypassing the catalytic combustion unit is increased. This causes a decrease in the air-fuel ratio of the gas being supplied to the burn-out zone from the catalytic combustion unit, which stabilizes the combustion state in the burn-out zone.

Preferably, the controller comprises means for decreasing the open ratio of the bypass control valve to maintain the outlet temperature of the catalytic combustion unit within a predetermined rage when the main fuel to be supplied to the catalytic combustion unit is increased in response to a load increase. When the load increases, the amount of main fuel is increase. This may result in the temperature in the catalytic combustion unit increases excessively beyond a heatproof temperature of the catalyst. According to the invention, the pre-burner fuel control is operated to decrease the inlet temperature and the open ratio of the bypass control valve is decreased to decrease the amount of air bypassing the catalytic combustion unit, which increases the air-fuel ratio in the catalytic combustion unit to cause a fuel lean condition in the catalytic combustion unit. This prevents the catalyst from being damaged by burning.

According to the controller for gas turbine engine, the aged-deterioration is determined. Specifically, the inlet temperature varies with the deterioration of the catalyst so that a difference between the inlet and outlet temperatures differs from that measured when the catalyst is new or not deteriorated. Then, a change of the difference corresponds to the deterioration of the catalyst. Therefore, the exhaust gas maintains an initial quality regardless of the deterioration of the catalyst by controlling the amount of fuel to the pre-burner and thereby controlling the inlet temperature so as to compensate the deterioration of the catalyst.

### BRIEF DESCRIPTION OF THE DRAWING

Fig. 1 is a block diagram of a gas turbine engine incorporating a controller according to the first embodiment of the invention;
Fig. 2 is an enlarged cross section of a combustor in Fig. 1;
Fig. 3 is a diagram showing a control flow of the combustor;
Fig. 4 is a graph showing a load versus inlet and outlet temperature difference for non-deteriorated and deteriorated catalysts;
Fig. 5A is a schematic cross section of a catalytic combustion unit; and
Fig. 5B is a graph showing a temperature distribution of the gas in the catalytic combustion unit.

### PREFERRED EMBODIMENT oF THE INVENTION

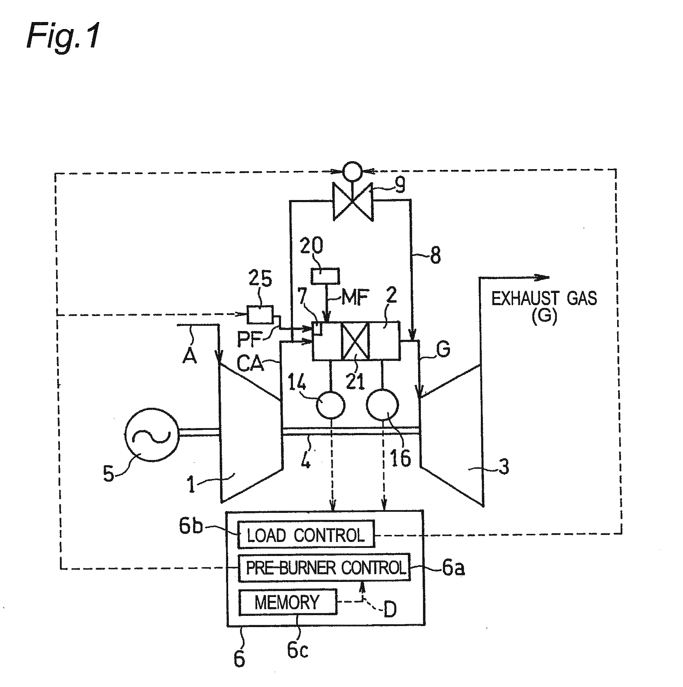

With reference to the accompanying drawings, a preferred embodiment according to the invention will be described below. Fig. 1 is a block diagram showing a general structure of a catalytic gas turbine engine which incorporates an engine controller according to the first embodiment of the invention. The gas turbine engine comprises a compressor 1 for drawing and compressing air A, a combustor 2 with a catalytic combustion unit 21 for mixing the compressed air CA from the compressor 1 with fuel and combusting the mixture in the catalytic combustion unit 21 and a turbine 3 which is rotated by the use of the combustion gas G generated by the combustor 2. The turbine 3 is connected to the compressor 1 and a rotational load or electric generator 5 through a rotating shaft 4 so that the rotation of the turbine 3 is transmitted to the compressor 1 and the electric generator 5 for the driving of the compressor 1 and the electric generator 5. The combustion gas G is then transported through the turbine 3 and then exhausted into the air. For example, the catalytic combustion unit 21 has a honeycomb member for bearing catalysts such as palladium and platinum.

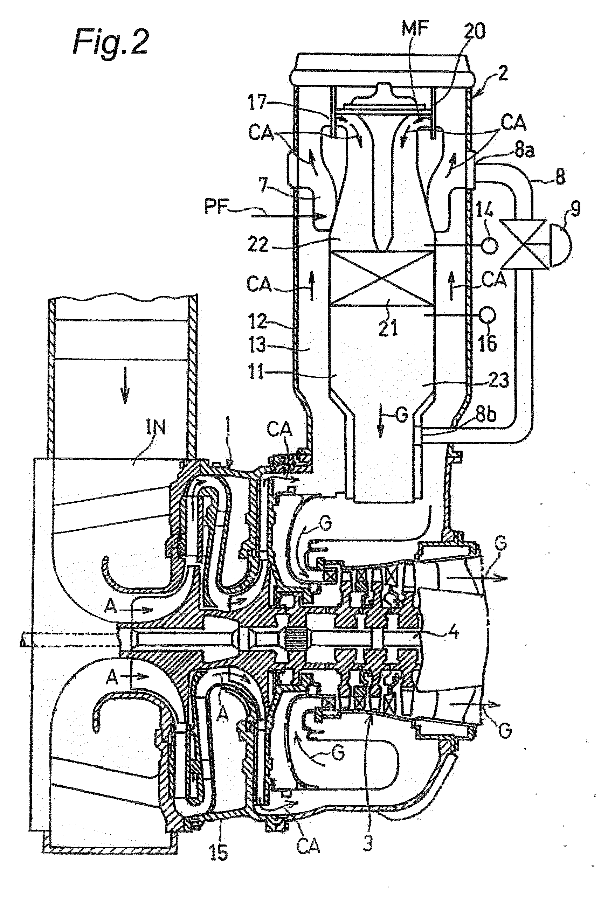

Fig. 2 is a longitudinal section view of the gas turbine engine in Fig. 1. The gas turbine engine comprises a two-stage centrifugal compressor 1 for drawing air A from the intake IN and then compressing the air to generate a compressed air, a combustor 2 and an axial turbine 3. The compressor 1 and the turbine 3 are accommodated within a housing 15. The combustor 2 is assembled to the housing 15.

The combustor 2 has a can-like cylindrical configuration and is arranged with its longitudinal axis oriented substantially in a radial direction of the turbine 3, e.g., in an upward direction as shown in Fig. 2. The combustor 2 comprises an inner cylinder 11 accommodating a catalytic combustion unit 21 and an outer cylinder 12 surrounding peripheral and top wall portions of the inner cylinder to define a cylindrical air passage 13 between the inner and outer cylinders. This allows that the compressed air CA from the compressor 1 flows upward in the air passage 13, then radially inward through a peripheral inlet 17 defined in the top portion of the inner cylinder 11 and downward within the interior of the inner cylinder 11.

A pre-burners 7 is provided on the upstream side of the inlet 17 for supplying the compressed air CA with pre-heating fuel PF and burning a mixture thereof. A main fuel injector 20 is provided on the downstream side of the pre-burner 7 for supplying main fuel MF to the catalytic combustor 21. An amount of the main fuel MF varies with the load. The main fuel injector 20 is made of a plurality of tubes positioned at regular intervals about the central axis of the combustor 2. The tubes each have one or more fuel injection nozzles. Provided inside the inner cylinder 11 is the catalytic combustion unit 21, premixing section or pre-mixer 22 located on the upstream side of the catalytic combustion unit 21 and burn-out section or zone 23. Accordingly, the compressed air CA from the air passage 13 is pre-heated by the pre-burner 7 and then supplied with the main fuel MF from the main fuel injector 20. Then, the compressed gas and the main fuel are well mixed in the pre-mixer 22 to cause an air-fuel mixture. The mixture is fed into the catalytic combustion unit 20 where it is combusted by catalytic reaction. The mixture is further combusted in the burn-out zone 23 to cause a combustion gas G. A detector 14 is provided in the pre-mixer 22 for detecting a temperature (inlet temperature) t1 in the vicinity of an inlet of the catalytic combustion unit and a detector 16 is provided in the burn-out zone 23 for detecting a temperature (outlet temperature) t2 in the vicinity of an outlet of the catalytic combustion unit.

The combustor 2 also comprises a bypass passage 8 fluidly connected between two different interior portions on the upstream and downstream sides of the catalytic combustion unit 21 so that a part of the compressed air CA approaching the catalytic combustion unit 21 is directly guided to the downstream side of the catalytic combustion unit 21. The bypass passage 8 comprises a valve 9 for controlling an amount of air flowing through the bypass passage 8.

Referring back to Fig. 1, the controller 6 is to provide an appropriate or the most appropriate control of an air-fuel ratio in the combustor 2 so as to minimize an amount of emission of the air-pollution substance, i.e., nitrogen oxide NOx or carbon monoxide CO included in the emission gas from the combustor 2 and comprises a pre-burner combustion control 6a, a load control 6b and a memory 6c. The memory 6c stores a difference of the inlet and outlet temperatures measured in the test operation conducted before the shipment of the engine as a default D. The load control 6b may be eliminated.

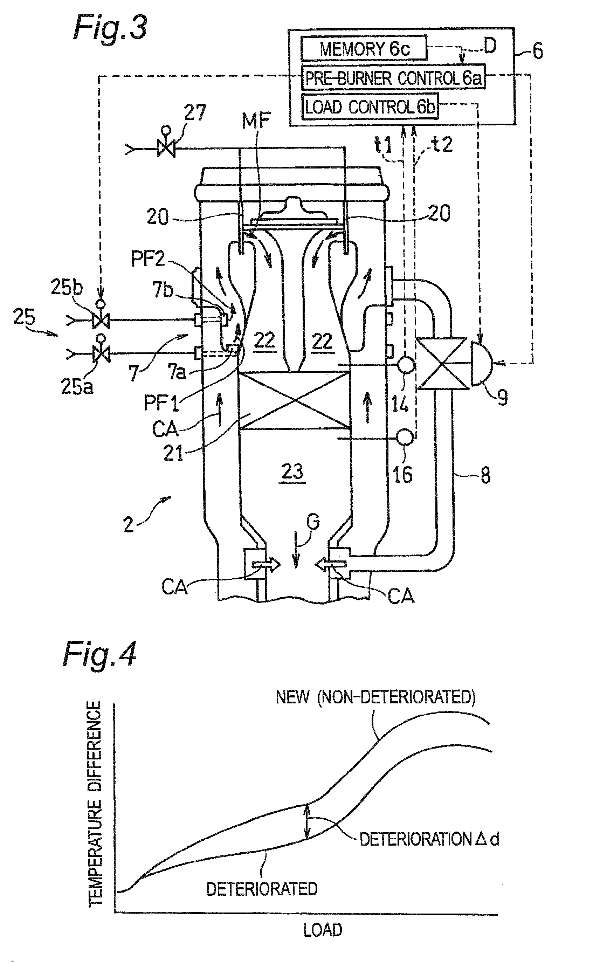

The pre-burner control 6a controls an open ratio of the pre-hearing fuel control valve 25 for controlling an amount of pre-hearing fuel and the bypass control valve 9 for controlling an amount of bypass air on the basis of the measured inlet and outlet temperatures t1 and t2 and the default D in the memory 6c. As shown in Fig. 3, the bypass passage 8 has an upstream end 8a which is communicated to the air passage 13 in the outer cylinder 12 and a downstream end 8b which is extended through the outer cylinder 12 and communicated to the combustion gas passage in the inner cylinder 11.

The pre-burner 7 comprises a primary burner 7a for holding a flame and a secondary burner 7b for controlling pre-mixing temperature or the inlet temperature t1. The primary burner 7a is connected to a source from which a primary fuel PF1 is supplied and the primary burner 7a is connected to another source from which a secondary fuel PF2 is supplied to the secondary burner 7b. Amounts of the primary and secondary fuels PF1 and PF2 to be supplied to the burners 7a and 7b are controlled by pre-heating fuel control valves 25, i.e., primary and secondary fuel control valves 25a and 25b, respectively. The amount of the main fuel MF to be supplied to the main fuel injector 20 is controlled by a main fuel control valve 27. The amount of the pre-heating fuel PF corresponds to a total amount of the primary and secondary fuels PF1 and PF2.

The load control 6b in Fig. 1 is designed to control an open ratio of the bypass control valve 9 to adjust the outlet temperature into a predetermined range according to a variation of the amount of main fuel MF to the combustor 2, or the load.

Next, referring to Fig. 3, discussions will be made to the operation of the gas turbine controller 6. With the increase of operating time of the gas turbine engine, the catalyst in the catalytic combustion unit 21 deteriorates to decrease the difference D between the inlet and outlet temperatures t1 and t2. The pre-burner fuel control 6a reads the inlet and outlet temperatures t1 and t2 detected by the inlet and outlet temperature detectors 14 and 16, respectively, and calculates the difference between the inlet and outlet temperatures d (=t2-t1).

Then, the calculated temperature difference d (present value) is compared with the default D detected before shipment. Fig. 4 is a graph showing load versus temperature difference curves for non-deteriorated (new) and deteriorated catalysts. As shown in the graph, the temperature difference of the deteriorated catalyst tends to be smaller than that of the non-deteriorated catalyst. A difference Δd (=D-d) indicates a degree of deterioration and therefore the pre-burner fuel control 6a determines the degree of deterioration Δd of the catalyst by comparing the present and initial temperature differences d and D.

Then, the pre-burner fuel control 6a in Fig. 3 controls the amount of fuel to be supplied to the pre-burner 7 on the basis of the deterioration Δd. For example, the outlet temperature t2 of the catalytic combustion unit 21 decreases according to the deterioration Δd, which may provide an adverse affect on the combustion in the burn-out zone 23 to increase the carbon monoxide concentration of the combustion gas. To solve this, the pre-burner fuel control 6a increases the open ratio of the secondary fuel control valve 25b and the resultant amount of the fuel to be supplied to the pre-burner 7. This increases the pre-heating temperature and the inlet temperature t1 to compensate the deterioration Δd. Accordingly, the outlet temperature t2 increases to compensate the deterioration Δd, which maintains a good combustion state and an appropriate carbon monoxide concentration of the combustion gas G.

The pre-burner fuel control 6a increase the open ratio of the bypass control valve 9 according to the deterioration Δd. This increases an amount of air bypassing the catalytic combustion unit 21 and thereby decreases an amount of air to be supplied to the catalytic combustion unit 21, which decreases the air-fuel ratio in the combustion unit. This creates a fuel-rich condition in the catalytic combustion unit 21, which promotes the catalytic combustion to increase the outlet temperature t2.

The load control 6b varies the open ratio of the bypass control valve 9 to maintain the outlet temperature t2 within a predetermined range according to the increase and decrease of the main fuel MF to the combustor 2 due to the load variation. Specifically, decreasing the amount of main fuel MF to the combustor 2 in response to load decrease can cause a drastic decrease of the catalytic reaction rate and the resultant drastic drop in the outlet temperature t2. To prevent this, the load control 6b increases the open ratio of the bypass control valve 9 and the resultant amount of air which bypasses the catalytic combustion unit 21 (load decrease control). This decreases the amount of air to be supplied into the catalytic combustion unit 21 and the resultant air-fuel ratio in the catalytic combustion unit 21 to cause a fuel rich condition, which promotes the catalytic combustion and thereby prevents the drastic drop of the inlet temperature t2 at the load decrease.

When increasing the amount of main fuel MF to the combustor 2 in response to the load increase, the load control 6b decreases the open ratio of the bypass control valve 9 and the resultant amount of air bypassing the catalytic combustion unit 21 to prevent an excessive increase of the outlet temperature t2 (load increase control). This increases the amount of air to be supplied to the catalytic combustion unit 21 and the resultant air-fuel ratio to cause a fuel lean condition, which de-accelerates the combustion to prevent an excessive temperature increase of the outlet temperature t2 which would thermally damage the catalytic combustion unit 21.

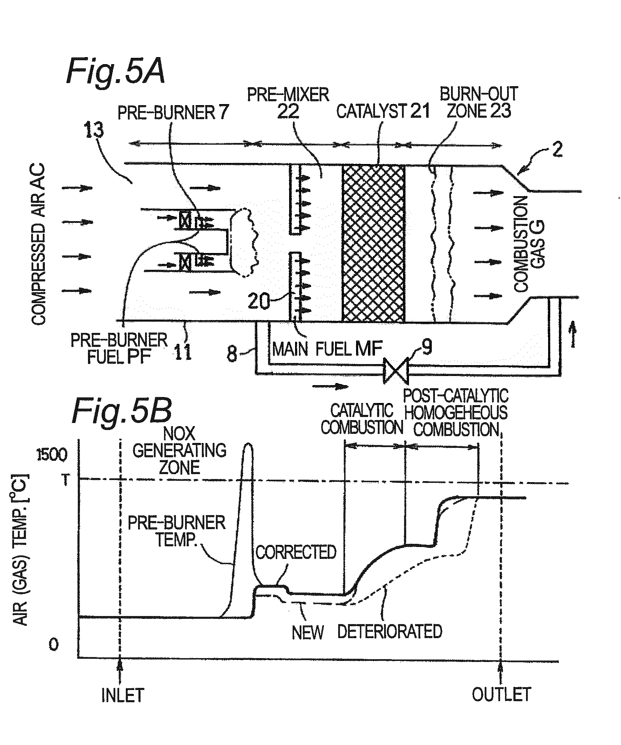

Referring next to Figs. 5A and 5B, discussions will be made to the operation of the combustor 2. In Fig. 5B, long and short dotted lines indicate temperature distributions of the non-deteriorated (new) and deteriorated catalysts, respectively, and a solid line indicates a temperature distribution corrected by the gas turbine controller 6 according to the embodiment of the invention. Also, alphabet T in the drawing shows a temperature at which NOx begins to generate.

As shown in Fig. 5A, the compressed air CA introduced in the air passage 13 of the combustor 2 is pre-heated by the pre-mixing combustion of the pre-burners 7 up to a temperature needed for the catalytic reaction. Then, the main fuel MF is added to the compressed air. This decreases the temperature of the compressed air. The compressed air and the fuel are mixed with each other at the pre-mixer 22 in the inner cylinder 11. The mixture is then supplied into the catalytic combustion unit 21.

The compressed air CA is heated by the catalytic combustion within the catalytic combustion unit 21. The heated compressed air is then supplied into the burn-out zone 23 where it is combusted through the burn-out process to generate a high-temperature combustion gas. The combustion gas G is then discharged from the combustor 2.

The long and short dotted lines for the non-deteriorated and deteriorated catalysts indicate that the deteriorated catalyst fails to ensure a sufficient temperature increase by the catalytic reaction, which may result in that the outlet temperature is not sufficiently high and therefore it takes much time to obtain a sufficiently heated combustion gas G. This may in turn generate unwanted carbon monoxide in the burn-out zone 23.

Looking at the solid line showing the temperature distribution corrected by the gas turbine controller 6 according to the embodiment of the invention, the inlet temperature is increased by the pre-heating of the pre-burners 7 to maintain the initial temperature distribution obtained for the non-graded catalyst and thereby minimize the generation of unwanted carbon monoxide in the burn-out 23.

As described above, the deterioration of the catalyst decreases the outlet temperature t2, which results in that the temperature difference d (=t2-t1) between the inlet and outlet temperatures becomes less than the initial difference D. This means that the difference Δd (=D-d) indicates the aged-deterioration of the catalyst. Accordingly, the aged-deterioration of the catalyst can be determined by the difference Δd. Therefore, according to the embodiment, the pre-burner fuel control 6a increases the open ratio of the secondary fuel control valve 25b to increase the amount of fuel to be supplied to the pre-burner 7, which increases the inlet temperature t1 to compensate the deterioration Δd and thereby maintain the initial characteristics of the exhaust gas in a stable manner.

Also, according to the embodiment, the open ratio of the bypass control valve 9 is increased with the increase of the deterioration Δd. This increases the amount of air which bypasses the catalytic combustion unit 21a to decrease the air-fuel ratio in the catalytic combustion unit 21, which generates a fuel-rich condition to improve the catalytic combustion and thereby maintain a stable combustion and the initial characteristics of the exhaust gas. As above, the temperature is controlled deliberately by the combination of the controls of the amount of fuel to be supplied to the pre-burner 7 and the amount of bypass air.

Further, according to the embodiment, when the main fuel MF to the combustor 2 is decreased in response to the load decrease, the open ratio of the bypass control valve 9 is increased in order to maintain the outlet temperature t2 within a predetermined range. Specifically, the open ratio increase results in an increase of amount of air bypassing the catalytic combustion unit 21 to decrease the air-fuel ratio of the gas to be supplied into the burn-out zone 23 from the catalytic combustion unit 21 and thereby generate a fuel-rich condition in the burn-out zone 23 which maintains a stable combustion in the burn-out zone 23. This in turn prevents a deterioration of combustion which is caused at the load decrease due to the decrease of the main fuel MF which in turn reduces the catalytic reaction and the resultant outlet temperature to increase the carbon monoxide concentration in the burn-out zone 23.

Furthermore, according to the embodiment, when the amount of main fuel MF to the catalytic combustion unit 21 is increased in response to the load increase, the open ratio of the bypass control valve 9 is decreased to maintain the outlet temperature t2 within the predetermined range, which prevents the catalyst from being heated excessively beyond its heatproof temperature. Specifically, when the load has increased, the pre-burner fuel control 7 is operated to prevent the increase of outlet temperature t2 and to decrease the amount of air bypassing the catalytic combustion unit 21 and thereby increase the resultant air-fuel ratio in the catalytic combustion unit 21. As a result, the catalyst is prevented from being damaged by burning.

Although several embodiments of the invention have been described with reference to the drawings, various additions, eliminations and/or modifications of components may be possible. For example, although the previous embodiment has been described in connection with the gas turbine engine which drives at a constant velocity for driving the electric generator 5 in Fig. 1, the invention may be incorporated in another gas turbine engine of which rotational velocity varies depending upon load. Also, the invention is not limited to the can type combustor and it can be applied to another type such as circular type combustor. Those variations and modifications are also within the scope of the invention.

### PARTS LIST

- 1:: compressor
- 2:: combustor
- 3:: turbine
- 6:: gas turbine controller
- 6a:: pre-burner fuel control
- 6b:: load control
- 6c:: memory
- 7:: pre-burner
- 8:: bypass passage
- 9:: bypass control
- 21:: catalytic combustion unit
- Δd:: deterioration
- CA:: compressed air
- d:: different between inlet and outlet temperatures in operation (prevent value)
- D:: initial different between inlet and outlet temperatures (default)
- MF:: main fuel
- PF:: pre-heating fuel
- t1:: inlet temperature in operation
- t2:: outlet temperature in operation

## Claims

1. A controller for use with a gas turbine engine, the engine comprising a combustor for combusting a mixture of compressed air from a compressor and a fuel under the existence of catalyst, the combustor having a catalytic combustion unit bearing the catalyst and a pre-burner provided on an upstream side of the catalytic combustion unit with respect to a flow of the compressed air for supplying and combusting a pre-heating fuel with the compressed air, the control comprising:
a memory for memorizing an initial temperature difference between inlet and outlet temperatures measured at inlet and outlet of the catalytic combustion unit with non-deteriorated catalyst accommodated therein;
a pre-burner control for calculating a present temperature difference between the inlet and outlet temperatures measured in an operation of the gas turbine engine and controlling an amount of the fuel to be supplied to the pre-burner according to a deterioration of the catalyst which is provided by a difference between the initial and present temperature differences.

2. The controller of claim 1, wherein the pre-burner fuel control controls the amount of the fuel to be supplied to the pre-burners so as to increase the inlet temperature of the catalytic combustion unit and thereby compensate the deterioration.

3. The controller of claim 1 or 2, further comprising
a bypass passage for guiding a part of the compressed air from a portion positioned on an upstream side of the catalytic combustion unit to a portion positioned on a downstream side of the catalytic combustion unit while bypassing the catalytic combustion unit; and
a bypass passage control valve for controlling an open ratio of the bypass passage;
wherein the open ratio of the bypass control valve is increased with an increase of the deterioration by the fuel control.

4. The controller of claim 3, further comprising
means for increasing the open ratio of the bypass control valve to maintain the outlet temperature of the catalytic combustion unit within a predetermined rage when the main fuel to be supplied to the catalytic combustion unit is decreased in response to a load decrease.

5. The controller of claim 3 or 4, further comprising
means for decreasing the open ratio of the bypass control valve to maintain the outlet temperature of the catalytic combustion unit within a predetermined rage when the main fuel to be supplied to the catalytic combustion unit is increased in response to a load increase.
